# EUROPEAN PATENT APPLICATION

(11) **EP 4 810 409 A1**
(43) Date of publication of application: **23.09.2026**
(21) Application number: 26165705.0
(22) Date of filing: 18.03.2026
(51) Int. Cl.: B65G 13/10, B65G 47/54

(54) **CONVEYOR SYSTEM AND ASSOCIATED METHODS**

(30) Priority: 18.03.2025 US 202563773881 P
(71) Applicant: Intelligrated Headquarters, LLC, Mason, OH 45040 (US)
(72) Inventor: BAUGH, Scott Eric, Charlotte, 28202 (US)
(74) Representative: Haseltine Lake Kempner LLP

(57) **Abstract**

Systems, apparatuses, methods, and computer program products are provided herein. A conveyor system comprises a central pathway configured to move items through the conveyor system along a direction of movement, a set of cartridges arranged sequentially in the central pathway, one or more diversion pathways coupled to the central pathway, and a controller configured to perform operations comprising generating tracking data representative of position information associated with items, determining based on item diversion data that an item should be diverted to a diversion pathway, and performing an actuation operation comprising rotating wheels of the cartridges in a first direction.

## Description

### CROSS-REFERENCE TO RELATED APPLICATIONS

This application claims priority U.S. Provisional Application No. 63/773,881, titled CONVEYOR SYSTEM AND ASSOCIATED METHODS, filed March 25, 2026, which is hereby incorporated by reference in its entirety.

### TECHNOLOGICAL FIELD

Embodiments of the present disclosure relate generally to a conveyor system and associated methods.

### BACKGROUND

Applicant has identified many technical challenges and difficulties associated with conveyor systems. Through applied effort, ingenuity, and innovation, Applicant has solved problems related to conveyor systems by developing solutions embodied in the present disclosure, which are described in detail below.

### BRIEF SUMMARY

Various embodiments described herein relate to conveyor systems.

In accordance with one aspect of the disclosure, a conveyor system is provided. In some embodiments, the conveyor system comprises a central pathway configured to move a first item and a second item through the conveyor system along a direction of movement. In some embodiments, the conveyor system comprises a set of cartridges comprising a first cartridge and a second cartridge, wherein the set of cartridges are arranged sequentially in the central pathway such that, as the first item is moved through the conveyor system along the direction of movement, the first item encounters the first cartridge before the second cartridge. In some embodiments, the conveyor system comprises one or more diversion pathways coupled to the central pathway. In some embodiments, the conveyor system comprises a controller comprising memory and one or more processors communicatively coupled to the memory, the one or more processors configured to perform operations comprising generating tracking data representative of first position information associated with the first item as the first item moves through the conveyor system and second position information associated with the second item as the second item moves through the conveyor system. In some embodiments, the operations comprise determining, based on first item diversion data, that the first item should be diverted from the central pathway to a first diversion pathway of the one or more diversion pathways. In some embodiments, the operations comprise performing a first actuation operation to divert the first item to the first diversion pathway, wherein the first actuation operation comprises actuating the first cartridge and the second cartridge by rotating a first set of wheels of the first cartridge in a first direction and a second set of wheels of the second cartridge in the first direction.

In some embodiments, the operations further comprise determining, based on the tracking data, that the first item is no longer in contact with the first cartridge.

In some embodiments, the operations further comprise determining, based on second item diversion data, that the second item should be diverted from the central pathway to a second diversion pathway of the one or more diversion pathways.

In some embodiments, the operations further comprise performing a second actuation operation to divert the second item to the second diversion pathway, wherein performing the second actuation operation comprises actuating the first cartridge by rotating the first set of wheels in a second direction, wherein the second actuation operation is performed while the second set of wheels are rotated in the first direction and the first item is in contact with the second cartridge.

In some embodiments, the tracking data comprises a tracking array.

In some embodiments, the tracking data is generated using at least one of a position sensor or a variable frequency drive associated with the set of cartridges.

In some embodiments, the set of cartridges comprises a plurality of cartridges arranged in a grid pattern along the central pathway, and wherein each cartridge of the plurality of cartridges is independently actuatable by the controller.

In some embodiments, the first direction is perpendicular to the direction of movement, and wherein rotating the first set of wheels and the second set of wheels in the first direction causes the first item to move laterally toward the first diversion pathway.

In some embodiments, the second direction is opposite to the first direction, and wherein the second diversion pathway is located on an opposite side of the central pathway from the first diversion pathway.

In some embodiments, the conveyor system comprises a position sensor that comprises one or more optical sensors positioned along the central pathway, and wherein the controller is configured to generate the tracking data based on detection signals received from the one or more optical sensors.

In some embodiments, the second actuation operation is performed in response to a determination that a trailing edge of the first item has cleared the first cartridge, and wherein the first cartridge is configured to transition from rotating the first set of wheels in the first direction to rotating the first set of wheels in the second direction while the first item remains in contact with the second cartridge.

In accordance with another aspect of the disclosure, a method is provided. In some embodiments, the method comprises generating tracking data representative of first position information associated with a first item as the first item moves through a conveyor system and second position information associated with a second item as the second item moves through the conveyor system. In some embodiments, the conveyor system comprises a central pathway configured to move the first item and the second item through the conveyor system along a direction of movement, a set of cartridges comprising a first cartridge and a second cartridge arranged sequentially in the central pathway such that the first item encounters the first cartridge before the second cartridge, and one or more diversion pathways coupled to the central pathway. In some embodiments, the method comprises determining, based on first item diversion data, that the first item should be diverted from the central pathway to a first diversion pathway of the one or more diversion pathways. In some embodiments, the method comprises performing a first actuation operation to divert the first item to the first diversion pathway, wherein the first actuation operation comprises actuating the first cartridge and the second cartridge by rotating a first set of wheels of the first cartridge in a first direction and a second set of wheels of the second cartridge in the first direction.

In accordance with another aspect of the disclosure, a non-transitory computer-readable medium is provided. In some embodiments, the non-transitory computer-readable medium stores instructions that, when executed by at least one processor, cause an apparatus to generate tracking data representative of first position information associated with a first item as the first item moves through a conveyor system and second position information associated with a second item as the second item moves through the conveyor system. In some embodiments, the conveyor system comprises a central pathway configured to move the first item and the second item through the conveyor system along a direction of movement, a set of cartridges comprising a first cartridge and a second cartridge arranged sequentially in the central pathway such that the first item encounters the first cartridge before the second cartridge, and one or more diversion pathways coupled to the central pathway. In some embodiments, the instructions cause the apparatus to determine, based on first item diversion data, that the first item should be diverted from the central pathway to a first diversion pathway of the one or more diversion pathways. In some embodiments, the instructions cause the apparatus to perform a first actuation operation to divert the first item to the first diversion pathway, wherein the first actuation operation comprises actuating the first cartridge and the second cartridge by rotating a first set of wheels of the first cartridge in a first direction and a second set of wheels of the second cartridge in the first direction.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates a schematic view of a conveyor system in accordance with one or more embodiments of the present disclosure;
FIG. 2 illustrates a partial view of a conveyor system in accordance with one or more embodiments of the present disclosure;
FIG. 3 illustrates a flowchart in accordance with one or more embodiments of the present disclosure; and
FIG. 4 illustrates a block diagram of an example computer processing device in accordance with one or more embodiments of the present disclosure.

### DETAILED DESCRIPTION

Example embodiments will be described more fully hereinafter with reference to the accompanying drawings, in which some, but not all embodiments of disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

### Overview

Example embodiments disclosed herein address technical problems associated with conveyor systems. As would be understood by one skilled in the field to which this disclosure pertains, there are numerous example scenarios in which it may be desirable to use a conveyor system. For example, it may be desirable to use a conveyor system in order to transport items through a warehouse. As another example, it may be desirable to use a conveyor system in order to sort and/or distribute items in a distribution center. In some implementations, it may be desirable to implement item diversion operations in order to enable a conveyor system to dynamically sort and route items to different destinations within a warehouse, distribution center, or packaging center. For example, it may be desirable to implement item diversion operations in order to enable a conveyor system to divert multiple items simultaneously to different diversion pathways. In this way, the conveyor system may be able to perform highthroughput, efficient, and accurate item sorting operations.

Example solutions for conveyor system item diversion include relying on sequential diversion operations where each item must completely exit a diverter region before a subsequent item can be diverted. However, such example solutions are slow, inefficient, and limited in throughput. For example, such example solutions do not implement independently actuatable cartridges to enable overlapping diversion operations for multiple items within a diverter region. As a result, such example solutions are unable to divert a second item to a different diversion pathway while a first item is still being diverted by downstream cartridges. As another example, such example solutions are inefficient because such example solutions do not leverage tracking data to determine when an item is no longer in contact with a particular cartridge. As a result, such example solutions require excessive spacing between items, which limits the throughput of the conveyor system. As another example, such example solutions are limited because such example solutions are unable to simultaneously rotate wheels of different cartridges in opposite directions to divert consecutive items to opposite sides of a central pathway. As a result, such example solutions are unable to maximize the sorting capacity of the conveyor system. Accordingly, there is a need for systems, apparatuses, methods, and computer program products for conveyor system item diversion that address the above deficiencies related to existing solutions for conveyor system item diversion.

Thus, to address these and/or other issues related to conveyor systems, example systems, apparatuses, methods, and computer program products are disclosed herein that include improved throughput and efficiency by enabling sorting and/or distribution of multiple items at a time. For example, an embodiment in this disclosure, described in greater detail below, includes a conveyor system comprising a central pathway configured to move a first item and a second item through the conveyor system along a direction of movement. In some embodiments, the conveyor system comprises a set of cartridges comprising a first cartridge and a second cartridge, wherein the set of cartridges are arranged sequentially in the central pathway such that, as the first item is moved through the conveyor system along the direction of movement, the first item encounters the first cartridge before the second cartridge. In some embodiments, the conveyor system comprises one or more diversion pathways coupled to the central pathway. In some embodiments, the conveyor system comprises a controller configured to perform operations comprising generating tracking data representative of first position information associated with the first item as the first item moves through the conveyor system and second position information associated with the second item as the second item moves through the conveyor system. In some embodiments, the operations comprise determining, based on first item diversion data, that the first item should be diverted from the central pathway to a first diversion pathway of the one or more diversion pathways. In some embodiments, the operations comprise performing a first actuation operation to divert the first item to the first diversion pathway, wherein the first actuation operation comprises actuating the first cartridge and the second cartridge by rotating a first set of wheels of the first cartridge in a first direction and a second set of wheels of the second cartridge in the first direction. Accordingly, the systems, apparatuses, methods, and computer program products disclosed herein overcome the deficiencies of existing solutions for conveyor system item diversion.

### Example Conveyor System

Embodiments of the present disclosure herein include a conveyor system. It should be readily appreciated that the embodiments of the system described herein may be configured in various additional and alternative manners in addition to those expressly described herein.

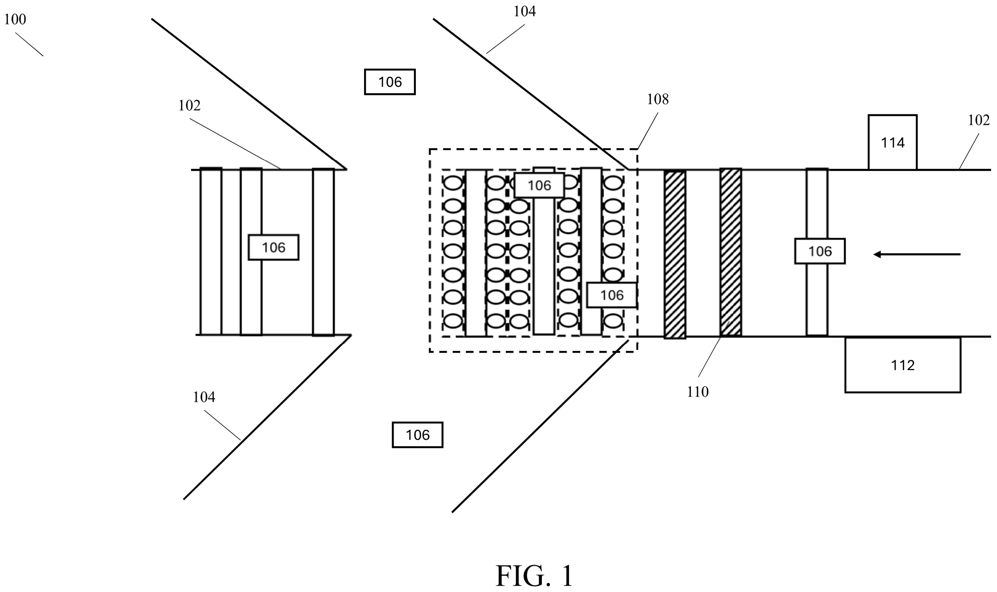

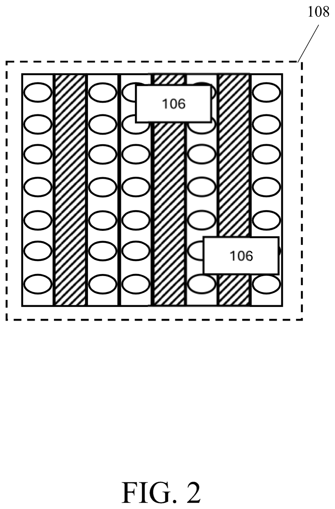

FIG. 1 and 2 illustrate a conveyor system 100 and/or one or more portions of the conveyor system 100. In some embodiments, the conveyor system 100 comprises and/or is associated with one or more of a central pathway 102, one or more diversion pathways 104, items 106, a set of cartridges 108, rollers 110, a controller 112, and/or position sensors 114. In some embodiments, the conveyor system 100 is configured to move, transport, convey, and/or the like items, such as items 106. In some embodiments, the conveyor system 100 is deployed in a variety of environments, such as a warehouse, distribution center, packaging center, and/or the like.

In some embodiments, the conveyor system 100 comprises a central pathway 102. In some embodiments, the items 106 may be loaded into the conveyor system 100 via the central pathway 102. In some embodiments, the items 106 may move along the central pathway 102 along a direction of movement. In some embodiments, the central pathway 102 extends through the conveyor system 100 and is configured to transport items 106 from an entry point to one or more destinations. In some embodiments, the conveyor system 100 comprises one or more diversion pathways 104. For example, the conveyor system 100 may comprise a first diversion pathway and a second diversion pathway. In some embodiments, one or more diversion pathways 104 are coupled to the central pathway 102 such that items 106 may be moved from the central pathway 102 to one or more of the one or more diversion pathways 104. In some embodiments, the one or more diversion pathways 104 branch off from the central pathway 102 to direct items 106 to different destinations. In some embodiments, the one or more diversion pathways 104 are positioned on opposite sides of the central pathway 102. In this regard, for example, the one or more diversion pathways 104 may allow for items 106 to be diverted in different lateral directions. In some embodiments, each of the one or more diversion pathways 104 is associated with a particular destination, sorting category, and/or processing station within the warehouse, distribution center, packaging center, and/or the like.

In some embodiments, the conveyor system 100 comprises rollers 110. In some embodiments, the rollers 110 are positioned along the central pathway 102 and/or one or more of the diversion pathways 104. In some embodiments, the rollers 110 are positioned adjacent to the set of cartridges 108. In some embodiments, the rollers 110 are interspersed between cartridges of the set of cartridges 108. In some embodiments, the rollers 110 comprise cylindrical components configured to rotate about a longitudinal axis. In some embodiments, the rollers 110 are composed of metal, plastic, rubber, composite materials, and/or the like. In some embodiments, the rollers 110 comprise a rubber or polymer outer surface configured to provide friction and grip for moving items 106. In some embodiments, the rollers 110 are motorized rollers configured to actively drive movement of items 106 through the conveyor system 100. Additionally, or alternatively, the rollers 110 may be passive rollers configured to freely rotate as items 106 pass over them. In some embodiments, the rollers 110 are configured to facilitate movement of items 106 through the conveyor system 100, such as along the direction of movement. In some embodiments, the rollers 110 provide continuous support for items 106 as the items 106 transition between different sections of the conveyor system 100.

In some embodiments, the conveyor system 100 comprises a set of cartridges 108. For example, the set of cartridges 108 may comprise a first cartridge and a second cartridge. In some embodiments, the set of cartridges 108 are arranged sequentially in the central pathway 102. In some embodiments, the set of cartridges 108 are arranged in a grid pattern along the central pathway 102. In some embodiments, the set of cartridges 108 are positioned at locations where the one or more diversion pathways 104 branch off from the central pathway 102 (e.g., an end of a cartridge may be positioned next to a diversion pathway). In some embodiments, the set of cartridges 108 are bounded within a defined region of the central pathway 102, such as a diverter region. In some embodiments, each of the set of cartridges 108 comprises a set of wheels and/or other rotatable objects. In some embodiments, the wheels of each cartridge are arranged in rows extending along the direction of movement. In some embodiments, the wheels comprise rubber, polymer, urethane, and/or the like materials configured to provide traction for diverting items 106. In some embodiments, each cartridge of the set of cartridges 108 comprises a cartridge structure configured to support and actuate the wheels. In some embodiments, the cartridge structures comprise metal, plastic, composite materials, and/or the like. In some embodiments, two cartridges of the set of cartridges 108 may be located directly next to each other. Additionally, or alternatively, two cartridges of the set of cartridges 108 may be separated by one or more of the rollers 110.

In some embodiments, each of the set of cartridges 108 is individually actuatable. In this regard, for example, each cartridge may be actuated to rotate its respective set of wheels independently of other cartridges. In some embodiments, the wheels of a cartridge are configured to rotate in a first direction, a second direction opposite to the first direction, and/or remain stationary. In some embodiments, the first direction and the second direction are perpendicular to the direction of movement. In some embodiments, rotating the wheels in the first direction causes items 106 to move laterally toward a first diversion pathway of the one or more diversion pathways 104. In some embodiments, rotating the wheels in the second direction causes items 106 to move laterally toward a second diversion pathway of the one or more diversion pathways 104 in which the second diversion pathway is located on an opposite side of the central pathway 102 from the first diversion pathway. In some embodiments, each of the set of cartridges 108 may be actuated at the same time to perform different functions. For example, a first cartridge may rotate its wheels in the first direction while a second cartridge rotates its wheels in the second direction. In this regard, the set of cartridges 108 may simultaneously divert multiple items 106 to different diversion pathways 104. In some embodiments, as a first item is moved through the conveyor system 100 along the central pathway 102 along the direction of movement, the first item may encounter the first cartridge of the set of cartridges 108 before encountering the second cartridge of the set of cartridges 108. In some embodiments, the set of cartridges 108 is configured to handle multiple items 106 simultaneously within the diverter region.

In some embodiments, the conveyor system 100 comprises position sensors 114. In some embodiments, the position sensors 114 are located along the central pathway 102. In some embodiments, the position sensors 114 are positioned at an entry point of the conveyor system 100, upstream of the set of cartridges 108, within the region of the set of cartridges 108, downstream of the set of cartridges 108, and/or at other locations along the central pathway 102 and/or the one or more diversion pathways 104. In some embodiments, the position sensors 114 comprise optical sensors, infrared sensors, laser sensors, photoelectric sensors, proximity sensors, and/or the like. In some embodiments, the position sensors 114 comprise one or more optical sensors positioned along the central pathway 102. In some embodiments, the position sensors 114 are configured to detect the presence and/or position of items 106 as the items 106 move through the conveyor system 100. In some embodiments, the position sensors 114 are configured to generate detection signals indicative of item positions. In some embodiments, the position sensors 114 are configured to track the movement of items 106 along the direction of movement. In some embodiments, the position sensors 114 are configured to determine when an item 106 enters and/or exits a particular region of the conveyor system 100, such as the region of the set of cartridges 108. In some embodiments, the position sensors 114 are configured to detect when an item 106 is in contact with a particular cartridge of the set of cartridges 108 and/or when the item 106 is no longer in contact with the particular cartridge.

In some embodiments, the conveyor system 100 comprises a controller 112. In some embodiments, the controller 112 is electronically and/or communicatively coupled to one or more of the central pathway 102, the one or more diversion pathways 104, the items 106, the set of cartridges 108, the rollers 110, the position sensors 114, and/or one or more computing devices located in proximity to and/or remotely from the conveyor system 100.

In some embodiments, the controller 112 is configured to generate tracking data. In some embodiments, the tracking data is representative of and/or indicative of positions of the items 106 within the conveyor system 100. In some embodiments, the tracking data comprises first position information associated with a first item as the first item moves through the conveyor system 100 and/or second position information associated with a second item as the second item moves through the conveyor system 100. In some embodiments, the tracking data comprises position information for a plurality of items 106 simultaneously present within the conveyor system 100. In some embodiments, the tracking data is configured to be updated in real-time. In this regard, in some embodiments, the tracking data is continuously updated in order to track the real-time positions of the items 106 in the conveyor system 100. In some embodiments, the tracking data comprises a tracking array. In some embodiments, the tracking array comprises a data structure configured to store position information for each item 106 within the conveyor system 100. In some embodiments, the tracking array comprises entries corresponding to different regions, zones, and/or cartridges of the conveyor system 100. In some embodiments, each entry of the tracking array indicates whether an item 106 is present at a corresponding location and/or which item 106 is present at the corresponding location. In some embodiments, the tracking data comprises a product identifier associated with each item 106. In some embodiments, the product identifier is a unique identifier configured to identify a particular item 106 within the conveyor system 100. In some embodiments, particular indexes in the tracking array are updated with the product identifier associated with an item 106 to indicate the position of the item 106 within the conveyor system 100. In some embodiments, the tracking indexes for each cartridge of the set of cartridges 108 are updated with each encoder pulse to update the position within the tracking array. In some embodiments, the product identifier corresponds to an array index for a product tracking table configured to store related information for each item 106, including a destination to which the item 106 is to be sorted and/or diverted. In some embodiments, each of the set of cartridges 108 comprises its own tracking array indexes for actuating and retracting decisions. In some embodiments, the tracking data comprises timestamps associated with item positions. In some embodiments, the tracking data comprises velocity information, acceleration information, and/or trajectory information for items 106. In some embodiments, the tracking data comprises diversion data indicative of a target diversion pathway for each item 106. In some embodiments, the tracking data is updated as items 106 move through the conveyor system 100 along the direction of movement. In some embodiments, the tracking data comprises contact information indicative of which cartridges of the set of cartridges 108 are currently in contact with each item 106.

In some embodiments, the controller 112 is configured to generate tracking data based on detection signals received from the position sensors 114. In some embodiments, the controller 112 is configured to generate the tracking data based on detection signals received from one or more optical sensors of the position sensors 114 positioned along the central pathway 102. In some embodiments, the controller 112 processes the detection signals to determine the presence, position, and/or movement of items 106 within the conveyor system 100. In some embodiments, the controller 112 is configured to generate the tracking data using a variable frequency drive associated with the set of cartridges 108. In some embodiments, the variable frequency drive provides feedback information indicative of motor speed, torque, and/or load conditions that the controller 112 uses to infer item positions and/or movement. In some embodiments, the controller 112 is configured to generate the tracking data using an external encoder and/or drive position feedback. In some embodiments, one or more encoders detect an item 106 by the item 106 blocking an induct photoeye associated with an encoder. In some embodiments, the controller 112 is configured to generate the tracking data by correlating detection signals from multiple position sensors 114 to track item movement along the direction of movement. In some embodiments, the controller 112 is configured to generate the tracking data by updating the tracking array based on detected item entry events, item exit events, and/or item movement events. In some embodiments, the controller 112 is configured to generate the tracking data by calculating item positions based on known conveyor speeds and elapsed time since item detection.

In some embodiments, the controller 112 is configured to generate the tracking data continuously as items 106 move through the conveyor system 100. In some embodiments, the controller 112 is configured to generate the tracking data in response to detecting an item 106 entering the conveyor system 100 via the central pathway 102. In some embodiments, the controller 112 is configured to generate the tracking data in response to detecting an item 106 entering the region of the set of cartridges 108. In some embodiments, the controller 112 is configured to generate the tracking data at periodic intervals. In some embodiments, the controller 112 is configured to generate the tracking data in response to receiving a detection signal from one or more of the position sensors 114. In some embodiments, the controller 112 is configured to generate the tracking data in response to determining that an item 106 is no longer in contact with a particular cartridge of the set of cartridges 108. In some embodiments, the controller 112 is configured to generate the tracking data prior to performing an actuation operation to divert an item 106 to one of the one or more diversion pathways 104. In some embodiments, as an item 106 is tracked through the tracking array, the divert decision for a cartridge of the set of cartridges 108 is determined.

In some embodiments, the controller 112 is configured to identify first diversion data. In some embodiments, the first diversion data comprises a tracking table configured to provide information about a first item of the items 106. In some embodiments, the first diversion data comprises information about an intended destination of the first item. For example, the intended destination may correspond to a particular shipping lane, packaging station, storage bin, or quality control area within a warehouse or distribution center. In some embodiments, the intended destination of the first item corresponds to a first diversion pathway of the one or more diversion pathways 104. In some embodiments, the first diversion data corresponds to at least a portion of the tracking data. In some embodiments, the first diversion data comprises a product identifier associated with the first item, a destination identifier associated with the intended destination, and/or routing information indicative of how the first item should be diverted to reach the intended destination. For example, the product identifier may comprise a barcode value, an RFID tag identifier, a SKU number, and/or a unique serial number associated with the first item. In some embodiments, the first diversion data comprises sorting category information, priority information, and/or processing requirements associated with the first item. For example, the sorting category information may indicate that the first item belongs to a particular product category such as fragile items, oversized items, expedited shipments, or items requiring temperature-controlled handling.

In some embodiments, the controller 112 is configured to identify the first diversion data by generating the first diversion data, retrieving the first diversion data from a data store, and/or receiving the first diversion data from an external system. For example, the external system may comprise a warehouse management system (WMS), an enterprise resource planning (ERP) system, an order management system, and/or a cloud-based logistics platform. In some embodiments, the controller 112 is configured to identify the first diversion data using a unique identifier associated with the first item. In some embodiments, the controller 112 is configured to identify the first diversion data by querying the tracking table using the product identifier associated with the first item. For example, the controller 112 may perform a database lookup operation using the product identifier (e.g., a product ID) as a key to retrieve the corresponding destination and routing information from the tracking table. In some embodiments, the controller 112 is configured to identify the first diversion data in response to detecting the first item entering the conveyor system 100 and/or approaching the set of cartridges 108. In some embodiments, the controller 112 is configured to identify the first diversion data by scanning a barcode, reading an RFID tag, and/or capturing an image of the first item using a vision system positioned along the central pathway 102.

In some embodiments, the controller 112 is configured to perform a first actuation operation to divert the first item to the first diversion pathway. In some embodiments, the first actuation operation comprises actuating a first cartridge and a second cartridge of the set of cartridges 108. For example, the first actuation operation may comprise sending control signals to motors associated with the first cartridge and the second cartridge to initiate wheel rotation. In some embodiments, the first actuation operation comprises rotating a first set of wheels of the first cartridge in a first direction and a second set of wheels of the second cartridge in the first direction. In some embodiments, the first direction is perpendicular to the direction of movement. For example, if the direction of movement is oriented along a longitudinal axis of the central pathway 102, the first direction may be oriented along a lateral axis that is perpendicular to the longitudinal axis. In some embodiments, rotating the first set of wheels and the second set of wheels in the first direction causes the first item to move laterally toward the first diversion pathway. In some embodiments, the rotation speed of the first set of wheels and the second set of wheels is coordinated to provide a smooth and consistent lateral movement of the first item toward the first diversion pathway.

In some embodiments, the first actuation operation is performed in response to determining that the first item is approaching the first cartridge. In some embodiments, the controller 112 is configured to determine that the first item is approaching the first cartridge based on the tracking data. For example, the controller 112 may determine that the first item is approaching the first cartridge when the tracking data indicates that the first item is within a predetermined distance threshold from the first cartridge, such as within 6 inches, 12 inches, or 24 inches of the first cartridge. In some embodiments, the first set of wheels and the second set of wheels are rotated such that they align with the first diversion pathway. For example, the wheels may be rotated to an angle of 30 degrees, 45 degrees, or 60 degrees relative to the direction of movement to direct the first item toward the first diversion pathway. In some embodiments, the first actuation operation is performed prior to the first item contacting the first cartridge such that the first set of wheels and the second set of wheels are positioned to divert the first item upon contact. In some embodiments, the controller 112 is configured to calculate a lead time for performing the first actuation operation based on the speed of the first item and the response time of the cartridge actuators.

In some embodiments, the controller 112 is configured to determine that the first item is no longer in contact with the first cartridge. In some embodiments, the controller 112 is configured to determine that the first item is no longer in contact with the first cartridge based on the tracking data. For example, the controller 112 may determine that the first item is no longer in contact with the first cartridge when the tracking array indicates that the first item has transitioned from an index corresponding to the first cartridge to an index corresponding to the second cartridge. In some embodiments, the controller 112 is configured to determine that the first item is no longer in contact with the first cartridge based on detection signals received from the position sensors 114. For example, the position sensors 114 may comprise break-beam sensors positioned at the trailing edge of the first cartridge that generate a detection signal when the first item passes beyond the first cartridge. In some embodiments, the tracking data indicates that the first item has moved past the first cartridge but is still in contact with the second cartridge. In some embodiments, the controller 112 is configured to determine that the first item is no longer in contact with the first cartridge by calculating the position of the first item based on known conveyor speeds and elapsed time since the first item was detected entering the region of the set of cartridges 108. For example, if the conveyor speed is 100 feet per minute and the first cartridge has a length of 12 inches, the controller 112 may determine that the first item is no longer in contact with the first cartridge after approximately 0.6 seconds have elapsed since the first item entered the first cartridge.

In some embodiments, second diversion data comprises a tracking table configured to provide information about a second item of the items 106. In some embodiments, the second diversion data comprises information about an intended destination of the second item. For example, the intended destination of the second item may correspond to a different shipping carrier lane, a returns processing area, or a different geographic region sorting bin than the intended destination of the first item. In some embodiments, the intended destination of the second item corresponds to a second diversion pathway of the one or more diversion pathways 104. In some embodiments, the second diversion data corresponds to at least a portion of the tracking data. In some embodiments, the second diversion data comprises a product identifier associated with the second item, a destination identifier associated with the intended destination of the second item, and/or routing information indicative of how the second item should be diverted to reach the intended destination of the second item. For example, the routing information may indicate that the second item should be diverted at a specific angle, at a specific speed, and/or using a specific subset of the set of cartridges 108.

In some embodiments, the controller 112 is configured to identify the second diversion data by generating the second diversion data, retrieving the second diversion data from a data store, and/or receiving the second diversion data from an external system. For example, the controller 112 may retrieve the second diversion data from a local database stored in the memory of the controller 112 or from a remote server accessible via a network connection. In some embodiments, the controller 112 is configured to identify the second diversion data using a unique identifier associated with the second item. In some embodiments, the second item is behind the first item in the conveyor system 100 along the direction of movement. For example, the second item may be positioned one cartridge length, two cartridge lengths, or multiple cartridge lengths behind the first item along the central pathway 102. In some embodiments, the controller 112 is configured to identify the second diversion data in response to detecting the second item entering the conveyor system 100 and/or approaching the set of cartridges 108. In some embodiments, the controller 112 is configured to identify the second diversion data concurrently with identifying the first diversion data such that diversion operations for both items can be planned in advance.

In some embodiments, the controller 112 is configured to perform a second actuation operation to divert the second item to the second diversion pathway. In some embodiments, the second actuation operation comprises actuating the first cartridge by rotating the first set of wheels in a second direction. For example, if the first direction corresponds to a clockwise rotation of the wheels, the second direction may correspond to a counterclockwise rotation of the wheels. In some embodiments, the second direction is opposite to the first direction. In some embodiments, the second diversion pathway is located on an opposite side of the central pathway 102 from the first diversion pathway. For example, the first diversion pathway may be located on a left side of the central pathway 102 while the second diversion pathway is located on a right side of the central pathway 102. In some embodiments, rotating the first set of wheels in the second direction causes the second item to move laterally toward the second diversion pathway. In some embodiments, the second actuation operation is performed without interrupting the movement of the first item along the first diversion pathway.

In some embodiments, the second actuation operation is performed in response to determining that the second item is approaching the first cartridge based on the tracking data. In some embodiments, the first set of wheels is rotated such that the first set of wheels aligns with the second diversion pathway. Additionally, or alternatively, the second actuation operation is performed in response to a determination that the first item is no longer in contact with the first cartridge based on the tracking data. For example, the controller 112 may initiate the second actuation operation immediately upon determining that the trailing edge of the first item has cleared the first cartridge. In some embodiments, the first cartridge is configured to transition from rotating the first set of wheels in the first direction to rotating the first set of wheels in the second direction while the first item remains in contact with the second cartridge. In some embodiments, the second actuation operation is performed while the second set of wheels are rotated in the first direction and the first item is in contact with the second cartridge. In this regard, in some embodiments, each cartridge of the set of cartridges 108 is configured to be actuated independently in order to increase the throughput of the conveyor system 100. For example, the independent actuation capability may enable the conveyor system 100 to process 50, 100, 200, or more items per minute by allowing consecutive items to be diverted to different diversion pathways without waiting for preceding items to completely exit the set of cartridges 108.

In some embodiments, after the controller 112 has performed an actuation operation, the controller 112 is configured to retract wheels of cartridges to an original position. In some embodiments, the original position corresponds to a position in which the wheels are oriented straight forward along the direction of movement. For example, the original position may correspond to a wheel orientation of 0 degrees relative to the direction of movement such that items passing over the wheels continue moving straight along the central pathway 102. In this regard, in some embodiments, if an item of the items 106 is not to be diverted along a diversion pathway, the wheels may remain in the original position such that the item continues along the central pathway 102. In some embodiments, if no product identifier can be found for an item 106, the cartridge will retract and/or remain retracted. In some embodiments, the controller 112 is configured to retract the wheels to the original position within a predetermined time period, such as within 50 milliseconds, 100 milliseconds, or 200 milliseconds after the item has cleared the cartridge. In some embodiments, each cartridge is offset by an amount based on the physical dimensions of each cartridge. For example, if each cartridge has a length of 12 inches along the direction of movement, the offset between consecutive cartridges may be 12 inches such that the cartridges are positioned end-to-end along the central pathway 102. In this regard, in some embodiments, the physical dimensions of each cartridge are used in order to offset each cartridge based on a cartridge's location in the set of cartridges 108. In some embodiments, the offset is calculated from a calibrated value of an initial cartridge of the set of cartridges 108. In some embodiments, the offset calculations account for gaps between cartridges, the positions of rollers 110 interspersed between cartridges, and/or manufacturing tolerances in the cartridge dimensions.

### Example Methods

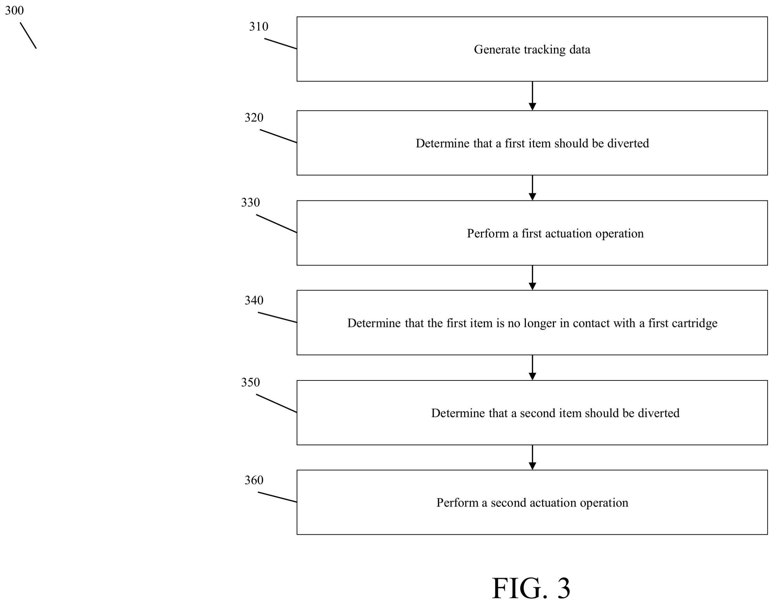

Referring now to FIG. 3, a flowchart providing an example method 300. In this regard, FIG. 3 illustrates operations that may be performed by the conveyor system 100 and/or components of the conveyor system 100, such as the controller 112. In some embodiments, the method 300 includes operations for performing item diversion operations using a conveyor system. In some embodiments, the example method 300 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 300.

As shown in block 310, the method 300 may comprise generating tracking data. As described above, in some embodiments, the controller 112 is configured to generate tracking data representative of first position information associated with a first item as the first item moves through the conveyor system 100 and second position information associated with a second item as the second item moves through the conveyor system 100. In some embodiments, the tracking data may be generated continuously as items 106 move through the conveyor system 100. Additionally, or alternatively, the tracking data may be generated in response to detecting an item 106 entering the conveyor system 100 via the central pathway 102. In some embodiments, the tracking data comprises a tracking array configured to store position information for each item 106 within the conveyor system 100. For example, the tracking array may comprise entries corresponding to different regions, zones, and/or cartridges of the conveyor system 100. In some embodiments, the controller 112 is configured to generate the tracking data based on detection signals received from the position sensors 114. Additionally, or alternatively, the controller 112 is configured to generate the tracking data using a variable frequency drive associated with the set of cartridges 108.

As shown in block 320, the method 300 may comprise determining that a first item should be diverted. As described above, in some embodiments, the controller 112 is configured to determine, based on first item diversion data, that the first item should be diverted from the central pathway 102 to a first diversion pathway of the one or more diversion pathways 104. In some embodiments, the first item diversion data comprises a tracking table configured to provide information about the first item. Additionally, or alternatively, the first item diversion data comprises information about an intended destination of the first item. For example, the intended destination may correspond to a particular shipping lane, packaging station, storage bin, or quality control area within a warehouse or distribution center. In some embodiments, the controller 112 is configured to identify the first item diversion data by generating the first item diversion data, retrieving the first item diversion data from a data store, and/or receiving the first item diversion data from an external system. In some embodiments, the controller 112 is configured to identify the first item diversion data using a unique identifier associated with the first item.

As shown in block 330, the method 300 may comprise performing a first actuation operation. As described above, in some embodiments, the controller 112 is configured to perform a first actuation operation to divert the first item to the first diversion pathway. In some embodiments, the first actuation operation comprises actuating a first cartridge and a second cartridge of the set of cartridges 108. For example, the first actuation operation may comprise sending control signals to motors associated with the first cartridge and the second cartridge to initiate wheel rotation. In some embodiments, the first actuation operation comprises rotating a first set of wheels of the first cartridge in a first direction and a second set of wheels of the second cartridge in the first direction. In some embodiments, the first direction is perpendicular to the direction of movement. Additionally, or alternatively, rotating the first set of wheels and the second set of wheels in the first direction causes the first item to move laterally toward the first diversion pathway. In some embodiments, the first actuation operation is performed in response to determining that the first item is approaching the first cartridge based on the tracking data.

As shown in block 340, the method 300 may comprise determining that the first item is no longer in contact with a first cartridge. As described above, in some embodiments, the controller 112 is configured to determine, based on the tracking data, that the first item is no longer in contact with the first cartridge. In some embodiments, the controller 112 may determine that the first item is no longer in contact with the first cartridge when the tracking array indicates that the first item has transitioned from an index corresponding to the first cartridge to an index corresponding to the second cartridge. Additionally, or alternatively, the controller 112 is configured to determine that the first item is no longer in contact with the first cartridge based on detection signals received from the position sensors 114. For example, the position sensors 114 may comprise break-beam sensors positioned at the trailing edge of the first cartridge that generate a detection signal when the first item passes beyond the first cartridge. In some embodiments, the tracking data indicates that the first item has moved past the first cartridge but is still in contact with the second cartridge.

As shown in block 350, the method 300 may comprise determining that a second item should be diverted. As described above, in some embodiments, the controller 112 is configured to determine, based on second item diversion data, that the second item should be diverted from the central pathway 102 to a second diversion pathway of the one or more diversion pathways 104. In some embodiments, the second item diversion data comprises a tracking table configured to provide information about the second item. Additionally, or alternatively, the second item diversion data comprises information about an intended destination of the second item. For example, the intended destination of the second item may correspond to a different shipping carrier lane, a returns processing area, or a different geographic region sorting bin than the intended destination of the first item. In some embodiments, the second item is behind the first item in the conveyor system 100 along the direction of movement. In some embodiments, the controller 112 is configured to identify the second item diversion data concurrently with identifying the first item diversion data such that diversion operations for both items can be planned in advance.

As shown in block 360, the method 300 may comprise performing a second actuation operation. As described above, in some embodiments, the controller 112 is configured to perform a second actuation operation to divert the second item to the second diversion pathway. In some embodiments, the second actuation operation comprises actuating the first cartridge by rotating the first set of wheels in a second direction. For example, if the first direction corresponds to a clockwise rotation of the wheels, the second direction may correspond to a counterclockwise rotation of the wheels. In some embodiments, the second direction is opposite to the first direction. Additionally, or alternatively, the second diversion pathway is located on an opposite side of the central pathway 102 from the first diversion pathway. In some embodiments, the second actuation operation is performed while the second set of wheels are rotated in the first direction and the first item is in contact with the second cartridge. In this regard, in some embodiments, each cartridge of the set of cartridges 108 is configured to be actuated independently in order to increase the throughput of the conveyor system 100. For example, the independent actuation capability may enable the conveyor system 100 to process 50, 100, 200, or more items per minute by allowing consecutive items to be diverted to different diversion pathways without waiting for preceding items to completely exit the set of cartridges 108.

### Example Computer Processing Device

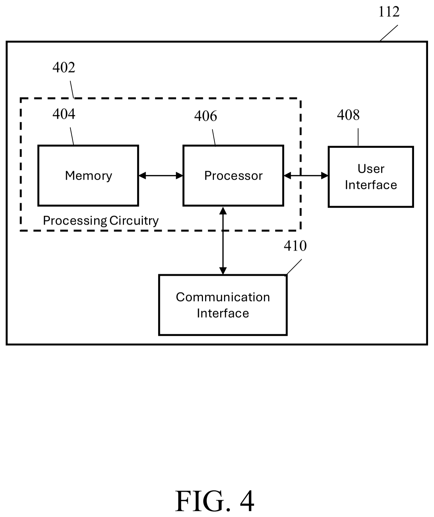

With reference to FIG 4, a block diagram of the controller 112 is illustrated in accordance with some example embodiments. However, it should be noted that the components, devices, or elements illustrated in and described with respect to FIG. 4 below may not be mandatory and thus one or more may be omitted in certain embodiments. Additionally, some embodiments may include further or different components, devices or elements beyond those illustrated in and described with respect to FIG. 4.

The controller 112 may include or otherwise be in communication with processing circuitry 402 that is configurable to perform actions in accordance with one or more embodiments disclosed herein. In this regard, the processing circuitry 402 may be configured to perform and/or control performance of one or more functionalities of the controller 112 in accordance with various embodiments, and thus may provide means for performing functionalities of the controller 112 in accordance with various embodiments. The processing circuitry 402 may be configured to perform data processing, application execution and/or other processing and management services according to one or more embodiments. In some embodiments, the controller 112 or a portion(s) or component(s) thereof, such as the processing circuitry 402, may be embodied as or comprise a chip or chip set. In other words, the controller 112 or the processing circuitry 402 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The controller 112 or the processing circuitry 402 may therefore, in some cases, be configured to implement an embodiment of the disclosure on a single chip or as a single "system on a chip." As such, in some cases, a chip or chipset may constitute means for performing one or more operations for providing the functionalities described herein.

In some embodiments, the processing circuitry 402 may include a processor 406 and, in some embodiments, such as that illustrated in FIG. 4, may further include memory 404. The processing circuitry 402 may be in communication with or otherwise control a user interface 408 and/or a communication interface 410. As such, the processing circuitry 402 may be embodied as a circuit chip (e.g., an integrated circuit chip) configured (e.g., with hardware, software or a combination of hardware and software) to perform operations described herein.

The processor 406 may be embodied in a number of different ways. For example, the processor 406 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. Although illustrated as a single processor, it will be appreciated that the processor 406 may comprise a plurality of processors. The plurality of processors may be in operative communication with each other and may be collectively configured to perform one or more functionalities of the controller 112 as described herein. In some embodiments, the processor 406 may be configured to execute instructions stored in the memory 404 or otherwise accessible to the processor 406. As such, whether configured by hardware or by a combination of hardware and software, the processor 406 may represent an entity (e.g., physically embodied in circuitry - in the form of processing circuitry 402) capable of performing operations according to embodiments of the present disclosure while configured accordingly. Thus, for example, when the processor 406 is embodied as an ASIC, FPGA or the like, the processor 406 may be specifically configured hardware for conducting the operations described herein. Alternatively, as another example, when the processor 406 is embodied as an executor of software instructions, the instructions may specifically configure the processor 406 to perform one or more operations described herein.

In some embodiments, the memory 404 may include one or more non-transitory memory devices such as, for example, volatile and/or non-volatile memory that may be either fixed or removable. In this regard, the memory 404 may comprise a non-transitory computer-readable storage medium. It will be appreciated that while the memory 404 is illustrated as a single memory, the memory 404 may comprise a plurality of memories. The memory 404 may be configured to store information, data, applications, instructions and/or the like for enabling the controller 112 to carry out various functions in accordance with one or more embodiments. For example, the memory 404 may be configured to buffer input data for processing by the processor 406. Additionally, or alternatively, the memory 404 may be configured to store instructions for execution by the processor 406. As yet another alternative, the memory 404 may include one or more databases that may store a variety of files, contents or data sets. Among the contents of the memory 404, applications may be stored for execution by the processor 406 in order to carry out the functionality associated with each respective application. In some cases, the memory 404 may be in communication with one or more of the processor 406, user interface 408, and/or communication interface 410 via a bus(es) for passing information among components of the controller 112.

The user interface 408 may be in communication with the processing circuitry 402 to receive an indication of a user input at the user interface 408 and/or to provide an audible, visual, mechanical or other output to the user. As such, the user interface 408 may include, for example, a keyboard, a mouse, a joystick, a display, a touch screen display, a microphone, a speaker, and/or other input/output mechanisms. As such, the user interface 408 may, in some embodiments, provide means for a user to access and interact with the conveyor system 100.

The communication interface 410 may include one or more interface mechanisms for enabling communication with other devices and/or networks. In some cases, the communication interface 410 may be any means such as a device or circuitry embodied in either hardware, or a combination of hardware and software that is configured to receive and/or transmit data from/to a network and/or any other device or module in communication with the processing circuitry 402. Accordingly, the communication interface 410 may, for example, include an antenna (or multiple antennas) and supporting hardware and/or software for enabling communications with a wireless communication network (e.g., a wireless local area network, cellular network, global positioning system network, and/or the like) and/or a communication modem or other hardware/software for supporting communication via cable, digital subscriber line (DSL), universal serial bus (USB), Ethernet or other methods.

### Conclusion

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A conveyor system comprising:
a central pathway, wherein the central pathway is configured to move a first item and a second item through the conveyor system along a direction of movement;
a set of cartridges comprising a first cartridge and a second cartridge, wherein the set of cartridges are arranged sequentially in the central pathway such that, as the first item is moved through the conveyor system along the direction of movement, the first item encounters the first cartridge before the second cartridge;
one or more diversion pathways coupled to the central pathway; and
a controller comprising memory and one or more processors communicatively coupled to the memory, the one or more processors configured to perform operations comprising:
generating tracking data representative of first position information associated with the first item as the first item moves through the conveyor system and second position information associated with the second item as the second item moves through the conveyor system;
determining, based on first item diversion data, that the first item should be diverted from the central pathway to a first diversion pathway of the one or more diversion pathways; and
performing a first actuation operation to divert the first item to the first diversion pathway, wherein the first actuation operation comprises actuating the first cartridge and the second cartridge by rotating a first set of wheels of the first cartridge in a first direction and a second set of wheels of the second cartridge in the first direction.

2. The conveyor system of claim 1, wherein the operations further comprise:
determining, based on the tracking data, that the first item is no longer in contact with the first cartridge;
determining, based on second item diversion data, that the second item should be diverted from the central pathway to a second diversion pathway of the one or more diversion pathways; and
performing a second actuation operation to divert the second item to the second diversion pathway, wherein performing the second actuation operation comprises actuating the first cartridge by rotating the first set of wheels in a second direction, wherein, the second actuation operation is performed while the second set of wheels are rotated in the first direction and the first item is in contact with the second cartridge.

3. The conveyor system of claim 1, wherein the tracking data comprises a tracking array.

4. The conveyor system of claim 1, wherein the tracking data is generated using at least one of a position sensor or a variable frequency drive associated with the set of cartridges.

5. The conveyor system of claim 1, wherein the set of cartridges comprises a plurality of cartridges arranged in a grid pattern along the central pathway, and wherein each cartridge of the plurality of cartridges is independently actuatable by the controller.

6. The conveyor system of claim 1, wherein the first direction is perpendicular to the direction of movement, and wherein rotating the first set of wheels and the second set of wheels in the first direction causes the first item to move laterally toward the first diversion pathway.

7. The conveyor system of claim 2, wherein the second direction is opposite to the first direction, and wherein the second diversion pathway is located on an opposite side of the central pathway from the first diversion pathway.

8. The conveyor system of claim 1, wherein the conveyor system comprises a position sensor that comprises one or more optical sensors positioned along the central pathway, and wherein the controller is configured to generate the tracking data based on detection signals received from the one or more optical sensors.

9. The conveyor system of claim 2, wherein the second actuation operation is performed in response to a determination that a trailing edge of the first item has cleared the first cartridge, and wherein the first cartridge is configured to transition from rotating the first set of wheels in the first direction to rotating the first set of wheels in the second direction while the first item remains in contact with the second cartridge.

10. A method comprising:
generating tracking data representative of first position information associated with a first item as the first item moves through a conveyor system and second position information associated with a second item as the second item moves through the conveyor system, wherein the conveyor system comprises:
a central pathway, wherein the central pathway is configured to move the first item and the second item through the conveyor system along a direction of movement;
a set of cartridges comprising a first cartridge and a second cartridge, wherein the set of cartridges are arranged sequentially in the central pathway such that, as the first item is moved through the conveyor system along the direction of movement, the first item encounters the first cartridge before the second cartridge; and
one or more diversion pathways coupled to the central pathway;
determining, based on first item diversion data, that the first item should be diverted from the central pathway to a first diversion pathway of the one or more diversion pathways; and
performing a first actuation operation to divert the first item to the first diversion pathway, wherein the first actuation operation comprises actuating the first cartridge and the second cartridge by rotating a first set of wheels of the first cartridge in a first direction and a second set of wheels of the second cartridge in the first direction.

11. The method of claim 10, further comprising:
determining, based on the tracking data, that the first item is no longer in contact with the first cartridge;
determining, based on second item diversion data, that the second item should be diverted from the central pathway to a second diversion pathway of the one or more diversion pathways; and
performing a second actuation operation to divert the second item to the second diversion pathway, wherein performing the second actuation operation comprises actuating the first cartridge by rotating the first set of wheels in a second direction, wherein, the second actuation operation is performed while the second set of wheels are rotated in the first direction and the first item is in contact with the second cartridge.

12. The method of claim 10, wherein the tracking data comprises a tracking array.

13. The method of claim 10, wherein the tracking data is generated using at least one of a position sensor or a variable frequency drive associated with the set of cartridges.

14. A non-transitory computer-readable medium storing instructions that, when executed by at least one processor, cause an apparatus to:
generate tracking data representative of first position information associated with a first item as the first item moves through a conveyor system and second position information associated with a second item as the second item moves through the conveyor system, wherein the conveyor system comprises:
a central pathway, wherein the central pathway is configured to move the first item and the second item through the conveyor system along a direction of movement;
a set of cartridges comprising a first cartridge and a second cartridge, wherein the set of cartridges are arranged sequentially in the central pathway such that, as the first item is moved through the conveyor system along the direction of movement, the first item encounters the first cartridge before the second cartridge; and
one or more diversion pathways coupled to the central pathway;
determine, based on first item diversion data, that the first item should be diverted from the central pathway to a first diversion pathway of the one or more diversion pathways; and
perform a first actuation operation to divert the first item to the first diversion pathway, wherein the first actuation operation comprises actuating the first cartridge and the second cartridge by rotating a first set of wheels of the first cartridge in a first direction and a second set of wheels of the second cartridge in the first direction.

15. The non-transitory computer-readable medium of claim 14, wherein the tracking data is generated using at least one of a position sensor or a variable frequency drive associated with the set of cartridges.
